# EUROPEAN PATENT APPLICATION

(11) **EP 1 930 394 A2**
(43) Date of publication of application: **11.06.2008**
(21) Application number: 07121582.6
(22) Date of filing: 27.11.2007
(51) Int. Cl.: C09K 11/77, G21K 4/00

(54) **Scintillation compositions and method of manufacture thereof**

(30) Priority: 04.12.2006 US 566467
(71) Applicant: GE Homeland Protection, Inc., Newark CA 94560-1012 (US)
(72) Inventor: Srivastava, Alok Mani, Niskayuna NY 12309 (US); Camanzo, Holly Ann, Niskayuna NY 12309 (US); Loureiro, Sergio Paulo Martins, Saratoga Springs NY 12866 (US)
(74) Representative: Bedford, Grant Richard

(57) **Abstract**

Disclosed herein is a composition comprising a solid solution of cerium halides and barium, strontium, and/or calcium halides. Disclosed herein too is a method of manufacturing a composition comprising mixing a cerium halide with a barium, strontium, and/or calcium halide; and firing the cerium halide and the barium halide to form a solid solution of the cerium halide and the barium, strontium, and/or calcium halide.

## Description

This disclosure relates generally to scintillation compositions and methods of manufacture thereof.

Scintillator crystals (hereinafter scintillators) are widely used in detectors for high-energy radiation, e.g. gamma rays, X-rays, cosmic rays, and other particles characterized by an energy level of greater than or equal to about 1 keV. The scintillator is coupled with a light-detection means, such as, for example, a photodetector. When photons from a radionuclide source impact the scintillator, the scintillator emits light. The photodetector produces an electrical signal proportional to the number of light pulses received, and to their intensity. Scintillators are in common use for many applications. Examples include medical imaging equipment, e.g., positron emission tomography (PET) devices; well logging for the oil and gas industry, and various digital imaging applications.

The composition of the scintillators generally determines the performance of the radiation detection equipment. The scintillator must be responsive to X-ray and gamma ray excitation. Moreover, the scintillator should possess a number of characteristics that enhance radiation detection. For example, it is desirable for most scintillator compositions to display a high light output, a short decay time, a reduced afterglow, a high "stopping power", and an acceptable energy resolution.

Various scintillator compositions that possess most or all of these properties have been in use over the years. For example, thallium-activated sodium iodide (NaI(T1)) has been widely employed as a scintillator for decades. Scintillators of this type are relatively large and fairly inexpensive. Moreover, NaI(Tl) scintillators are characterized by a very high light output.

Examples of other common scintillator compositions include bismuth germanate (BGO), cerium-doped gadolinium orthosilicate (GSO), and cerium-doped lutetium orthosilicate (LSO). Each of these materials has some good properties that are very suitable for certain applications. However, as explained below, these materials also unfortunately possess some drawbacks.

For example, thallium-activated sodium iodide is a very soft, hygroscopic scintillator, readily absorbing oxygen and moisture. Moreover, such a scintillator produces a large and persistent after-glow, which can interfere with the intensity-counting system. Furthermore, the decay time of NaI(T1), about 230 nanoseconds, is too slow for many applications.

BGO, on the other hand, is non-hygroscopic. However, the light yield of this scintillator (15% of NaI(Tl)), is too low for many applications. The scintillator also has a slow decay time. Moreover, it has a high refractive index, which results in light loss due to internal reflection.

While GSO scintillator crystals are suitable for some applications, their light yield is only about 20% of that obtained with NaI(T1). Moreover, these scintillator crystals are easily cleaved. It is therefore very difficult to cut and polish these crystals into any specific shape without running the risk of fracturing the entire scintillator crystal.

The LSO scintillator also exhibits some drawbacks. For example, the lutetium element of this scintillator contains a small amount of a natural, long-decay radioactive isotope, Lu176. The presence of this isotope will provide a background count rate that can greatly interfere with highly sensitive detector applications. Moreover, lutetium is very expensive, and has a relatively high melting point, which can sometimes make processing difficult.

In view of these drawbacks, it is desirable to have new scintillating materials that can serve as efficient light generators, can exhibit efficient gamma ray attenuation and have reasonable energy resolution.

Disclosed herein according to an aspect of the present invention is a composition comprising a solid solution of cerium halides and barium, strontium, and/or calcium halides.

Disclosed herein too is a method of manufacturing a composition comprising mixing a cerium halide with a barium, strontium, and/or calcium halide; and firing the cerium halide and the barium halide to form a solid solution of the cerium halide and the barium, strontium, and/or calcium halide.

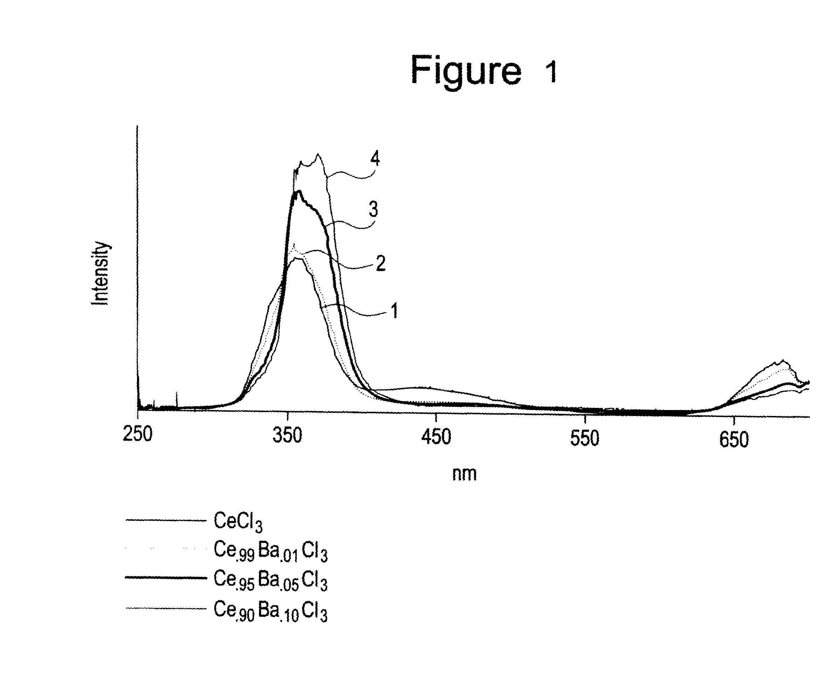

Figure 1 is a graphical representation of the light yield obtained from a comparative composition comprising cerium chloride and the compositions comprising a solid solution of barium chloride and cerium chloride.

Disclosed herein is a scintillator composition comprising cerium and barium halides that serve as efficient light generators and that can generate up to about 45,000 photons/MeV (megaelectron-volt). The scintillator compositions exhibit efficient gamma ray attenuation and have an energy resolution of up to about 3%. It inadvertently has been discovered that addition of barium (Ba²⁺) ions to cerium halides increases the light yield of the cerium halides during scintillation. In one embodiment, the scintillator composition is a solid solution of cerium halides and barium halides.

The scintillator composition has the formula of equation (I) below:

[Ce₍₁₋ₓ₎Aₓ]Z₃ (I)

where Ce represents cerium, A represents barium, strontium and calcium 'x' is an amount of about 0.01 to about 0.99 and Z represents a halogen. Exemplary halogens are fluorine, chlorine, bromine, iodine or a combination comprising at least one of the foregoing halogens. A general example of the equation (I) that comprises a combination of halogens is [Ce_{0.99}Ba_{0.1}](Cl, Br)₃.

In an exemplary embodiment, x is an amount of about 0.01 to about 0.95, specifically about 0.1 to about 0.9, more specifically about 0.2 to about 0.8, and even more specifically about 0.3 to about 0.7. In an exemplary embodiment x is an amount of about 0.01 to about 0.2.

Examples of cerium halides are cerium chloride, cerium boride, cerium iodide, cerium fluoride, or a combination comprising at least one of the foregoing cerium halides, while examples of barium, strontium, or calcium halides are barium, strontium, or calcium chloride; barium, strontium, or calcium boride; barium, strontium, or calcium iodide; barium, strontium, or calcium fluoride; or a combination comprising at least one of the foregoing barium, strontium, or calcium halides.

The scintillator composition may be prepared in several different forms. In some embodiments, the composition is in monocrystalline (e.g., "a single crystal") form. Monocrystalline scintillation crystals have a greater tendency for transparency. They are especially useful for high-energy radiation detectors, e.g., those used for gamma rays.

However, the scintillator composition can be in other forms as well, depending on its intended end use. For example, it can be in powder form. It can also be prepared in the form of a polycrystalline ceramic. It also should be understood that the scintillator compositions may contain small amounts of impurities. These impurities usually originate with the starting materials, and typically constitute less than about 0.1 % by weight of the scintillator composition. They may constitute less than about 0.01 % by weight of the scintillator composition.

The composition also may include parasitic phases whose volume percentage is usually less than about 1%. Moreover, minor amounts of other materials may be included purposefully in the scintillator compositions, as taught in U.S. Patent 6,585,913 (Lyons et al.), which is incorporated herein by reference. For example, minor amounts of other rare earth oxides can be added to reduce afterglow. Calcium and/or dysprosium can be added to reduce the likelihood of radiation damage.

The scintillator compositions may be prepared by several methods. In some embodiments, the scintillator compositions may be prepared by dry processes. Some exemplary techniques for preparing polycrystalline materials are described in the aforementioned Lyons et al. patent, as well as in U.S. Patents 5,213,712 (Dole), and 5,882,547 (Lynch et al.), which are incorporated herein by reference. In one embodiment, a suitable powder scintillator composition containing the desired materials (e.g., the cerium halides and the barium halides themselves) in the correct proportions is first prepared, followed by such operations as calcination, die forming, sintering, and/or hot isostatic pressing. In another embodiment, the powder scintillator composition can be prepared by mixing various forms of the reactants (e.g., salts, halides, or mixtures thereof). Mixing can be carried out in the presence of a liquid such as an alcohol, or a hydrocarbon.

The mixing of the reactants can be conducted in manufacturing devices that ensure uniform blending to form an intimate mixture. For example, mixing can be conducted in an agate mortar and pestle. Alternatively, a blender such as a ball mill, a bowl mill, a hammer mill, a jet mill, an extruder or a combination comprising at least one of the foregoing blenders can be used. The mixture can also contain various additives, such as fluxing compounds and binders. Depending on compatibility and/or solubility, heptane, or an alcohol, such as ethyl alcohol, can be used as a liquid vehicle during milling.

After being blended, the mixture can be fired in a furnace, under temperature and time conditions effective to convert the mixture into a solid solution. In the case of powder reactants, firing will usually be carried out at a temperature of about 500°C to about 1,000°C. An exemplary firing temperature for the manufacturing of the scintillator composition is about 600°C to about 1,000°C. The firing time is about 15 minutes to about 10 hours. An exemplary firing time for the manufacturing of the scintillator composition is about 30 minutes to about 10 hours.

Firing should be carried out in an atmosphere free of oxygen and moisture, e.g., in a vacuum, or using an inert gas such as nitrogen, helium, neon, argon, krypton, xenon, or a combination comprising at least one of the foregoing inert gases. Some of the procedures are described in U.S. Patent 7,084,403 (Srivastava et al.), which is incorporated herein by reference. After the firing is complete, the resulting material can be pulverized, to put the scintillator into powder form.

Methods for making single crystal materials are also well known in the art. A nonlimiting, exemplary reference is "Luminescent Materials", by G. Blasse et al., Springer-Verlag (1994). Usually, the appropriate reactants are melted at a temperature sufficient to form a congruent, molten composition. The melting temperature will depend on the identity of the reactants themselves. An exemplary temperature is about 650°C to about 1100°C.

Various techniques can be employed to form single crystals from the molten material. Some of these techniques are described in references such as U.S. Patents 6,437,336 (Pauwels et al.) and 6,302,959 (Srivastava et al.); "Crystal Growth Processes", by J.C. Brice, Blackie & Son Ltd (1986); and the "Encyclopedia Americana", Volume 8, Grolier Incorporated (1981), pages 286-293. These descriptions are incorporated herein by reference. Examples of suitable crystal-growing techniques are the Bridgman-Stockbarger method; the Czochralski method, the zone-melting method (or the "floating zone" method), the temperature gradient method, or a combination comprising at least that one of the foregoing crystal-growing techniques.

In one embodiment, in one method of producing a single crystal, a seed crystal of the desired scintillator composition (described above) is disposed in a solvent that can dissolve the scintillator composition. New crystalline material from the solution of the scintillator composition is allowed to grow and added to the seed crystal, using one of the aforementioned growing techniques. The size of the crystal will depend in part on its desired end use, e.g., the type of radiation detector into which it will be incorporated.

The scintillator composition can be prepared in other forms as well. For example, in the case of the polycrystalline ceramic form mentioned above, the scintillator composition is first produced in powder form or converted to powder form. The material is then sintered to transparency at a temperature that is about 65% to about 85% of the melting point of the powder. The sintering can be carried out under atmospheric conditions, or under pressure.

In another embodiment, the scintillator composition can be used for detecting high-energy radiation in a scintillation detector. The detector comprises one or more crystals, formed from the scintillator composition. Scintillation detectors are disclosed in U.S. Patents 6,585,913 and 6,437,336, mentioned above, as well as in U.S. Patent 6,624,420 (Chai et al.), which is also incorporated herein by reference. In general, the scintillator composition crystals in these devices receive radiation from a source being investigated, and produce photons that are characteristic of the radiation. The photons are detected with a photodetector. Examples of suitable photodetectors are photomultiplier tubes, photodiodes, charge-coupled device (CCD) sensors, image intensifiers, or a combination comprising at least one of the foregoing photodetectors.

The radiation detectors themselves, which comprise the scintillator and the photodetector, can be connected to a variety of tools and devices, as mentioned previously. Examples are well logging tools and nuclear medicine devices (e.g., PET). The radiation detectors may also be connected to digital imaging equipment, e.g., pixilated flat panel devices. Moreover, the scintillator may serve as a component of a screen scintillator. For example, a powdered scintillator composition can be formed into a relatively flat plate that is attached to a film, e.g., photographic film. High-energy radiation, e.g., x-rays, originating from a source, would contact the scintillator and be converted into light photons, which are then captured and developed on the film.

The scintillator composition provides numerous advantages over other commercially available scintillator compositions. The scintillator composition can simultaneously exhibit a short decay time, a reduced afterglow, a high "stopping power", and acceptable energy resolution. Furthermore, the scintillator compositions can be manufactured economically, and can also be employed in a variety of other devices that are capable of detecting radiation.

The following examples, which are meant to be exemplary, not limiting, illustrate compositions and methods of manufacturing of some of the various embodiments of the scintillator compositions described herein.

### EXAMPLES

This example was conducted to demonstrate the efficient light generation capabilities of the scintillator compositions comprising cerium and barium halides. Four compositions were prepared and tested. One of the compositions is a comparative composition comprising only cerium chloride, while three other compositions represent the scintillator compositions of this example.

The three scintillator compositions were prepared by dry-mixing various portions of cerium chloride and barium chloride. Mixing was carried out in an agate mortar and pestle. The uniform mixture was then transferred to an aluminum crucible, and fired at a temperature of about 900 °C. The heating atmosphere was a mixture of 0.5% hydrogen and 99.5% nitrogen. Table 1 shows the comparative composition (Sample #1) and the three compositions (Sample #'s 2, 3 and 4).

**Table 1**

| Sample # | Composition |
|---|---|
| 1* | CeCl₃ |
| 2 | Ce_{0.99}Ba_{0.1}Cl₃ |
| 3 | Ce_{0.95}Ba_{0.05}Cl₃ |
| 4 | Ce_{0.90}Ba_{0.10}Cl₃ |

| | |
|---|---|
| *=Comparative composition | |

As can be seen in the Table 1, in Sample #2 the molar ratio of cerium to barium is 99:1. In Sample #3, the molar ratio of cerium to barium is 95:5, while in Sample #4, the molar ratio of cerium to barium is 90:10.

The emission spectrum for each sample was determined under x-ray excitation, using an optical spectrometer. The results are shown in the Figure. The Figure is a plot of wavelength (nm) as a function of intensity (arbitrary units). The peak excitation wavelength for the comparative composition (Sample #1) was about 350 nm. As can be seen from the Figure, the addition of barium chloride to the cerium chloride promotes a shift in the peak excitation wavelength as well as the peak intensity. With the introduction of barium chloride, the peak excitation wavelength shifts to 370 nm from 350 nm. In addition, it can be seen that the peak intensity is proportional to the amount of barium chloride in the scintillator composition. Scintillator compositions having a larger amount of barium generally display a greater peak intensity.

In one embodiment, as can be seen from the Figure, the light yield for the scintillator composition comprising cerium and barium, strontium or calcium halides is increased by an amount of greater than or equal to about 10%, specifically by an amount of greater than or equal to about 25%, and more specifically by an amount of greater than or equal to about 40% over a comparative composition that contains only cerium halides.

These emission characteristics are a clear indication that the scintillator compositions comprising cerium and barium halides can be very useful for detecting x-rays and gamma rays. Moreover, it should be noted that these scintillator compositions are self-activating. In other words, they don't require a separate activator compound, since cerium functions as both the activator (i.e., the emission source of the radiation measured by a scintillation detector) and a host element.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A composition comprising:
a solid solution of cerium halides and barium, strontium, and/or calcium halides.

2. The composition of Claim 1, having the formula of equation (I)
[Ce(₁₋ₓ)Aₓ]Z₃ (I)
where Ce represents cerium, A represents barium, strontium, and/or calcium, x is an amount of about 0.01 to about 0.99 and Z represents a halogen.

3. The composition of Claim 2, wherein Z is fluorine, chlorine, bromine, iodine or a combination comprising at least one of the foregoing halogens.

4. The composition of Claim 2 or Claim 3, wherein x is an amount of about 0.01 to about 0.95.

5. The composition of Claim 2 or Claim 3, wherein x is an amount of about 0.2 to about 0.8.

6. The composition of any preceding Claim, wherein the cerium halides are cerium chloride, cerium boride, cerium iodide, cerium fluoride, or a combination comprising at least one of the foregoing cerium halides.

7. The composition of any preceding Claim, wherein the barium, strontium, or calcium halides are barium, strontium, or calcium chlorides; barium, strontium, or calcium borides; barium, strontium, or calcium iodides; barium, strontium, or calcium fluorides or a combination comprising at least one of the foregoing barium, strontium, or calcium halides.

8. The composition of any preceding Claim, wherein the composition is in monocrystalline form.

9. The composition of any preceding Claim, wherein the composition is in powder form.

10. The composition of any preceding Claim, wherein the composition is in the form of a polycrystalline ceramic.

11. An article comprising the composition of any preceding Claim.

12. A method of manufacturing a composition comprising:
mixing a cerium halide with a barium, strontium, and/or calcium halide; and
firing the cerium halide and the barium halide to form a solid solution of the cerium halide and the barium, strontium, and/or calcium halide.

13. An article manufactured by the method of Claim 12.
